(19) Europäisches Patentamt / European Patent Office / Office européen des brevets

(11) EP 4 722 776 A1

(12) **EUROPEAN PATENT APPLICATION**
published in accordance with Art. 153(4) EPC

(43) Date of publication:
08.04.2026 Bulletin 2026/15

(21) Application number: 24810631.2

(22) Date of filing: 12.01.2024

(51) International Patent Classification (IPC):
*G02B 6/36* (2006.01)   *B08B 1/00* (2024.01)

(52) Cooperative Patent Classification (CPC):
B08B 1/00; G02B 6/36

(86) International application number:
PCT/JP2024/000648

(87) International publication number:
WO 2024/241621 (28.11.2024 Gazette 2024/48)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 25.05.2023 JP 2023086330

(71) Applicant: **Fujikura Ltd.**
**Tokyo 135-8512 (JP)**

(72) Inventor: **SAKAGUCHI, Yuya**
**Sakura-shi, Chiba 285-8550 (JP)**

(74) Representative: **Ter Meer Steinmeister & Partner**
**Patentanwälte mbB**
**Artur-Ladebeck-Strasse 51**
**33617 Bielefeld (DE)**

(54) **OPTICAL CONNECTOR CLEANING TOOL**

(57) The optical connector cleaning tool 1 includes a cleaning unit 10 including: a cleaning head 21 that includes a pressing surface 221 and that holds a cleaning element 5 so that the cleaning element 5 is turned back at the pressing surface 221 that presses the cleaning element 5 against a connection end surface 811 of the optical connector 80; a shaft member 26 that supports the cleaning head 21 so that the cleaning head 21 is relatively movable with respect to the shaft member 26; and bobbins 31 and 32 that supplies and collects the cleaning element 5 to and from the pressing surface 221, a guide nozzle 50 that accommodates the cleaning unit 10 so that the cleaning unit 10 is relatively movable with respect to the guide nozzle 50 and that has a front end portion 51 through which the cleaning head 21 can protrude and retract, and a rack gear 52 and a pinion gear 23 that drives the bobbins 31 and 32 in accordance with a relative movement of the cleaning unit 10 with respect to the guide nozzle 50.

Fig. 2

FORWARD ← FIRST DIRECTION → BACKWARD

**Description**

[TECHNICAL FIELD]

The present invention relates to an optical connector cleaning tool that cleans a connection end surface of an optical connector.

For designated countries that are permitted to be incorporated by reference in the literature, the contents of Japanese Patent Application No. 2023-086330 filed with Japan Patent Office on May 25, 2023 is incorporated herein by reference and is regarded as a part of the description of this specification.

[BACKGROUND ART]

An optical connector cleaning tool is known that is capable of cleaning in both of one case in which the optical connector plug is directly cleaned and the other case in which the optical connector plug attached to the adapter is cleaned (refer to, for example, Patent Document 1).

When using this optical connector cleaning tool, the optical connector plug can be directly cleaned by attaching a tubular cap to the front end of the optical connector cleaning tool and inserting the optical connector plug into this cap. On the other hand, the optical connector plug attached to an adapter can be cleaned by inserting the front end of the optical connector cleaning tool without the cap into the adapter.

[CITATION LIST]

[PATENT DOCUMENT]

PATENT DOCUMENT 1: JP 2010-191465 A

[SUMMARY OF THE INVENTION]

[PROBLEMS TO SOLVED BY INVENTION]

The cleaning work using the optical connector cleaning tool described above has a problem that the attaching and detaching of the cap occurs according to the state of the optical connector and the working efficiency of the cleaning work of the optical connector is affected.

An object of the present invention is to provide an optical connector cleaning tool that is capable of improving the efficiency of the cleaning work of an optical connector.

[MEANS FOR SOLVING PROBLEM]

[1] An aspect 1 of the present invention is an optical connector cleaning tool that cleans a connection end surface of an optical connector, the optical connector cleaning tool comprising: a cleaning unit comprising: a cleaning head that comprises a pressing surface pressing a cleaning element against the connection end surface and in which the cleaning element is wound on the pressing surface; a shaft member that supports the cleaning head so that the cleaning head is relatively movable with respect to the shaft member; and a supplying and collecting unit that supplies and collects the cleaning element to and from the pressing surface, a tubular member that accommodates the cleaning unit so that the cleaning unit is relatively movable with respect to the tubular member and that has a front end portion through which the cleaning head can protrude and retract, and a drive mechanism that drives the supplying and collecting unit in accordance with a relative movement of the cleaning unit with respect to the tubular member.

[2] An aspect 2 of the present invention may be the optical connector cleaning tool of the aspect 1, wherein a relative movable amount Le of the cleaning head with respect to the shaft member may satisfy the following formula (1).

$$7 \text{ [mm]} \leqq Le \leqq 12 \text{ [mm]} \ldots (1)$$

[3] An aspect 3 of the present invention may be the optical connector cleaning tool of the aspect 1 or 2, wherein the cleaning unit may comprise a support body that supports the shaft member and the supplying and collecting unit, the optical connector cleaning tool may comprise: a housing that accommodates the support body; and a first biasing member that biases the support body in a direction away from the tubular member, and the housing may be fixed to the support body and may be relatively movable together with the support body with respect to the tubular member.

[4] An aspect 4 of the present invention may be the optical connector cleaning tool of the aspect 1 or 2, wherein the cleaning unit may comprise a support body that supports the shaft member and the supplying and collecting unit, the optical connector cleaning tool may comprise: a housing that accommodates the support body; and a first biasing member that biases the support body in a direction away from the tubular member, and the housing may be fixed to the tubular member and may be relatively movable together with the tubular member with respect to the support body.

[5] An aspect 5 of the present invention may be the optical connector cleaning tool of the aspect 3 or 4, wherein the supplying and collecting unit may comprise: a feeding bobbin from which the cleaning element supplied to the pressing surface is fed; and a winding bobbin around which the cleaning element collected form the pressing surface is wound, the support body may rotatably support the feeding bobbin and the winding bobbin, and the drive mechanism may rotate the winding bobbin in accordance with the relative movement of the cleaning unit with respect to the tubular member to wind the cleaning element around the winding bobbin.

[6] An aspect 6 of the present invention may be the optical connector cleaning tool of any one of the aspects 1 to 5, wherein the front end portion of the tubular member may have an inner diameter to allow a ferrule of the optical connector to be inserted into the front end portion and not to allow a holding part holding the ferrule to be inserted into the front end portion.

[7] An aspect 7 of the present invention may be the optical connector cleaning tool of any one of the aspects 1 to 6, wherein the tubular member may comprise a main body to which the front end portion is connected, the main body may have an outer diameter to allow the main body to be inserted into a receiving part capable of receiving a counterpart optical connector.

[8] An aspect 8 of the present invention may be the optical connector cleaning tool of any one of the aspects 1 to 7, wherein the cleaning unit may comprise a second biasing member that is interposed between the cleaning head and the shaft member and that biases the cleaning head in a direction away from the shaft member.

[9] An aspect 9 of the present invention may be the optical connector cleaning tool of the aspect 8, wherein the second biasing member may have a spring constant k that satisfies the following formulas (2) and (3).

$$0.95 \ [N] < k \times (La - Lb + Ld) < 1.5 \ [N] \ ... \ (2)$$

$$0.95 \ [N] < k \times (La - Lb - Lm) < 1.5 \ [N] \ ... \ (3)$$

In the above formulas (2) and (3), La is a distance in which the cleaning unit can relatively move with respect to the tubular member, Lb is a distance between a front end of the tubular member and the pressing surface in a normal state, Ld is a distance between a first contact surface of the optical connector with the tubular member and the connection end surface of a ferrule of the optical connector, and Lm is a distance between a second contact surface of a holding part holding the ferrule with the tubular member and the connection end surface of the ferrule.

[EFFECT OF THE INVENTION]

In the present invention, since the cleaning unit including the cleaning head, the shaft member, and the supplying and collecting unit is relatively movable with respect to the tubular member, the relative movement amount of the cleaning head with respect to the tubular member can be increased, and the projection amount of the cleaning head from the tubular member can also be increased. Therefore, it is not necessary to attach and detach the cap, and it is possible to improve the efficiency of the cleaning work of the optical connector.

[BRIEF DESCRIPTION OF DRAWING(S)]

FIG. 1 is a front view showing the optical connector plug as a cleaning object of the optical connector cleaning tool in the embodiment of the present invention;
FIG. 2 is a schematic cross-sectional view showing the overall configuration of the optical connector cleaning tool in the embodiment of the present invention;
FIG. 3 is a cross-sectional view showing the front end portions of the cleaning shaft and the guide nozzle in the embodiment of the present invention;

FIG. 4(a) is a front view of the cleaning shaft and the guide nozzle as viewed in the direction of arrow A in FIG. 3, and FIG. 4(b) is a cross-sectional view taken along line IVB-IVB in FIG. 4(a);

FIG.5(a) to FIG.5(c) are diagrams for explaining a method of directly cleaning the optical connector plug in a single state using the optical connector cleaning tool in the embodiment of the present invention, FIG. 5(a) is a diagram showing a state before the optical connector cleaning tool is inserted into the optical connector plug, and FIG. 5(b) is a diagram showing a state in which the optical connector cleaning tool is inserted into the optical connector plug, and FIG. 5(c) is a diagram showing a state in which the cleaning unit is pushed to the guide nozzle;

FIG. 6(a) is an enlarged view of a portion VIA in FIG. 5(a), and FIG. 6(b) is an enlarged view of a portion VIB in FIG. 5(b);

FIG. 7(a) to FIG. 7(c) are diagrams for explaining a method of cleaning the optical connector plug in a state of being attached to the adapter using the optical connector cleaning tool in the embodiment of the present invention, FIG. 7(a) is a diagram showing a state before the optical connector cleaning tool is inserted into the adapter, FIG. 7(b) is a diagram showing a state in which the optical connector cleaning tool is inserted into the adapter, and FIG. 7(c) is a diagram showing a state in which the cleaning unit is pushed to the guide nozzle;

FIG. 8(a) is an enlarged view of a portion VIIIA in FIG. 7(a), and FIG. 8(b) is an enlarged view of a portion VIIIB in FIG.7(b); and

FIG. 9 is a schematic cross-sectional view showing the overall configuration of the optical connector cleaning tool in another embodiment of the present invention.

[MODE(S) FOR CARRYING OUT THE INVENTION]

Hereinafter, embodiments of the invention will be described with reference to the drawings.

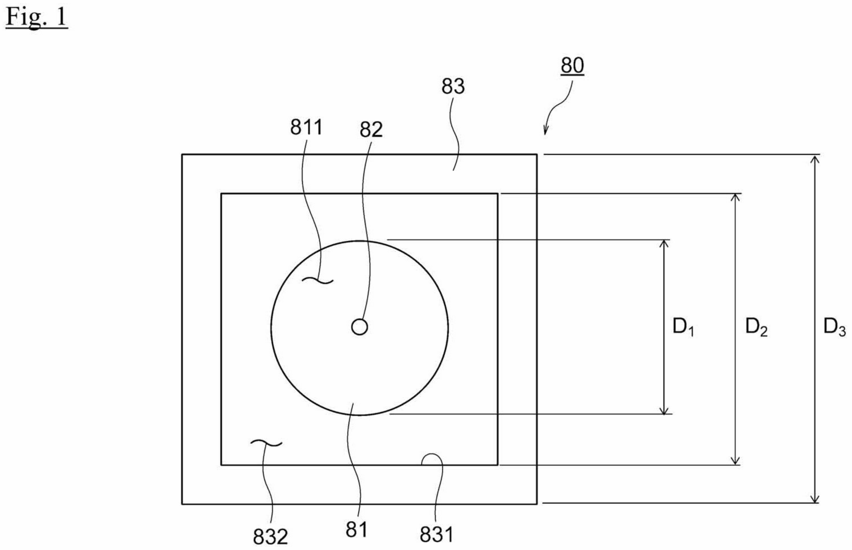

The optical connector cleaning tool 1 in the present embodiment is a cleaner that cleans a connection end surface of an optical connector that connects optical fibers. FIG. 1 is a front view showing the optical connector plug 80 as a cleaning object of the optical connector cleaning tool 1 in the embodiment of the present invention. The optical connector plug 80 corresponds to an example of the "optical connector" in the aspect of the present invention.

As shown in FIG. 1, the optical connector plug 80 to be cleaned by the optical connector cleaning tool 1 (hereinafter also simply referred to as "cleaner 1") includes a ferrule 81, optical fibers 82, and a housing 83.

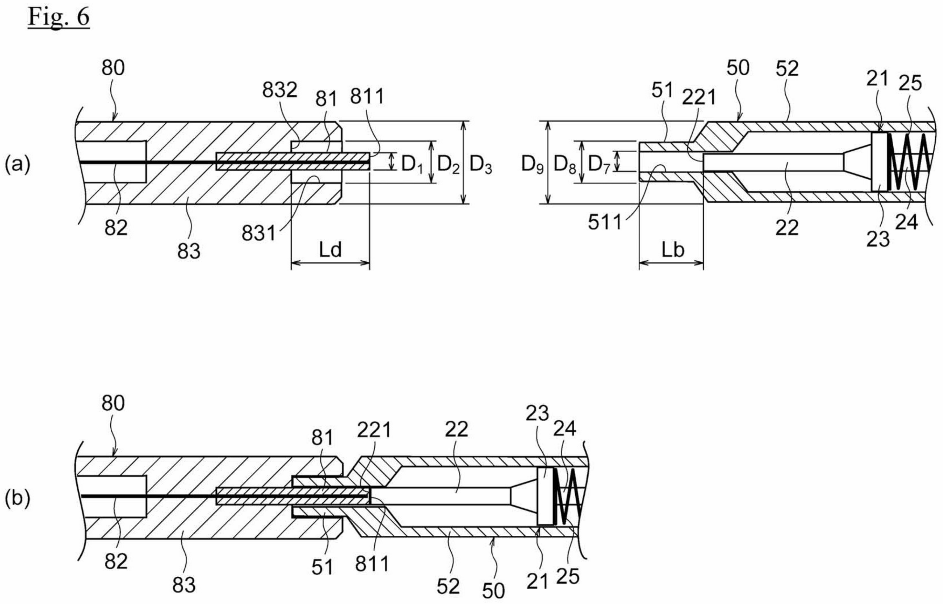

The ferrule 110 has a cylindrical shape having an outer diameter $D_1$ and is made of, for example, zirconia (zirconium oxide). As shown in FIG. 6 (a) described below, the ferrule 81 has a fiber holding hole penetrating the ferrule 81 in the longitudinal direction thereof. An optical fiber 82 is inserted into the fiber holding hole, and the optical fiber 82 is fixed to the ferrule 81 with an adhesive or the like. The optical fiber 82 is exposed from the circular end face 811 of the ferrule 81. The ferrule 81 is held by a housing 83.

As shown in FIG. 1, the housing 83 has a prismatic shape having an outer diameter $D_3$ and is made of, for example, a resin material. The housing 83 has a recess 831 having an inner diameter $D_2$. As shown in FIG. 6(a) described below, the ferrule 81 protrudes from the bottom surface 832 of the recess 831 by a distance Ld, passes through the recess 831, and extends to the outside of the recess 831. That is, the distance between the bottom surface 832 of the recess 831 and the end surface 811 of the ferrule 81 is Ld. The bottom surface 832 of the recess 831 corresponds to an example of the "first contact surface" in the aspect of the present invention.

Although not particularly limited, as a specific example of the optical connector plug 80, the single-fiber connection type optical connector such as SC (Single - fiber Coupling) type optical connector specified in JIS C5973, FC (Fiber Connector) type optical connector specified in JIS C5970, MU (Miniature Universal) type optical connector specified in JIS C5983, LC (Lucent Connector) type optical connector, and the like can be exemplified.

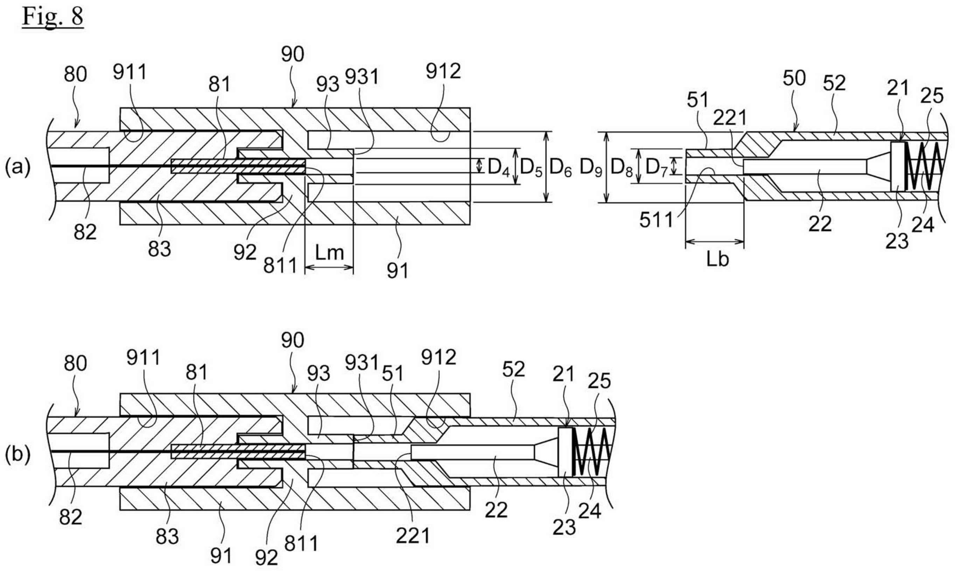

A pair of optical connector plugs 80 each including the ferrule 81 are connected to each other using an adapter 90. As shown in FIG. 8( a ) described below, the adapter 90 includes a housing (outer tubular part) 91 , a support wall 92 , and a tubular part (sleeve) 93. The housing 91 of the adapter 90 corresponds to an example of the " receiving part" in the aspect of the present invention, and the tubular part 93 corresponds to an example of the "holding part " in the aspect of the present invention.

The housing 91 has a rectangular tubular shape having an inner diameter $D_6$. The inner diameter $D_6$ is larger than the outer diameter $D_3$ of the housing 83 of the optical connector plug 80 ($D_6 > D_3$), and the optical connector plug 80 can be inserted into the housing 91 of the adaptor 90. The support wall 92 is disposed in the housing 91 at approximately the center of the housing 91 in the axial direction. The inner hole of the housing 91 is partitioned into two by the support wall 92, and therefore the housing 91 has a pair of recesses 911 and 912. The recess 911 is open at one end of the housing 91, while the recess 912 is open at the other end of the housing 91. The pair of recesses 911 and 912 have the same shape.

The tubular part 93 is supported by the support wall 92 and is located inside the housing 91, and the tubular part 93 is connected to the housing 91 via the support wall 92. The tubular part 93 has a cylindrical shape having an outer diameter $D_5$, and the inner hole thereof has an inner diameter $D_4$ ($D_5 > D_4$). The inner diameter $D_4$ is slightly larger than the outer diameter $D_1$ of the ferrule 81 ($D_4 > D_1$). Therefore, the ferrule 81 can be fitted to the tubular part 93. Although not particularly illustrated, the tubular part 93 includes an inner circumferential portion that contacts the ferrule 81 and an outer circumferential portion that covers the inner circumferential portion. The inner circumferential portion is made of, for example, zirconia, while the outer circumferential portion is made of, for example, a resin material.

The tubular part 93 has openings at both ends, and the ferrules 81 can contact each other by inserting the ferrules 81 into the tubular part 93 from the pair of openings. As shown in FIG. 8(a) described below, when only one optical connector plug 80 is attached to the adapter 90, the end face 811 of the ferrule 81 inserted from the opening formed in one end face of the tubular part 93 is located inside the tubular part 93 and is separated from the other end face 931 of the tubular part 93 by a distance Lm. The end surface 931 of the tubular part 93 corresponds to an example of the "second contact surface" in the aspect of the present invention.

When the pair of optical connector plugs 80 are inserted into the recesses 911 and 912 on both sides of the housing 91 of the adapter 90, the ferrules 81 respectively enter the tubular part 93. Then, the optical fibers 82 exposed from the end faces 811 of the ferrules 81 are optically connected to each other by abutting the end faces 811 of the ferrules 81 of the pair of optical connector plugs 80 against each other in the tubular part 93.

If a contaminant such as dirt, dust, and oil is adhered to the end surface 811 of the ferrule 81 at the time of abutting, it may cause damage at the time of attaching and detaching, an increase in transmission loss, and the like. Therefore, the end surface 811 of the ferrule 81 is cleaned using the cleaner 1 described below before the optical connector plugs 80 are connected.

The optical connector cleaning tool 1 of the present embodiment can directly clean the optical connector plug 80 in a single state (a state in which the optical connector plug is not attached to the adapter 90) and can also clean the optical connector plug 80 in a state in which the optical connector plug is attached to the adapter 90 without the above-described cap attaching/detaching operation. That is, the optical connector cleaning tool 1 is capable of cleaning the connection end surface 811 of the optical connector plug 80 without using the cap regardless of the state of the optical connector plug 80.

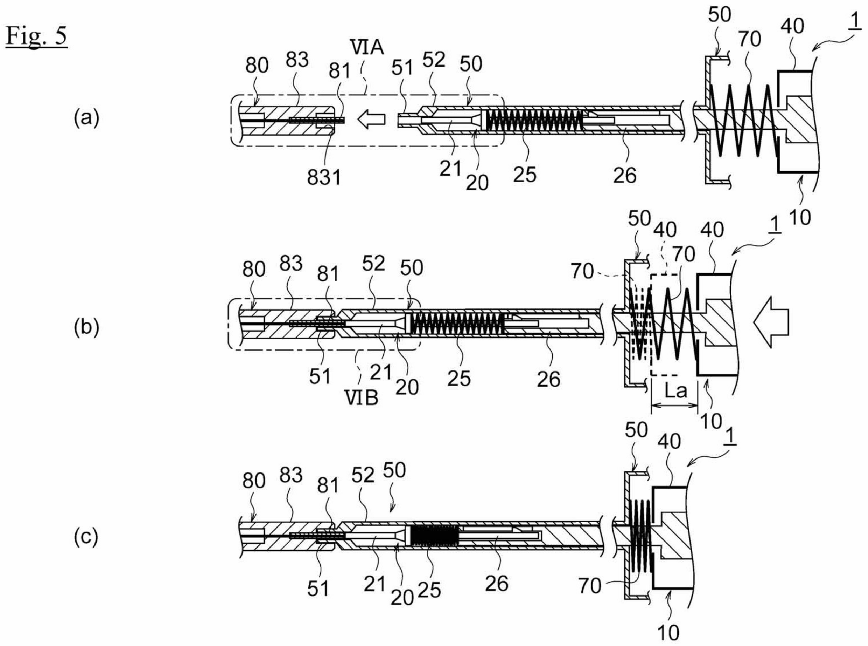

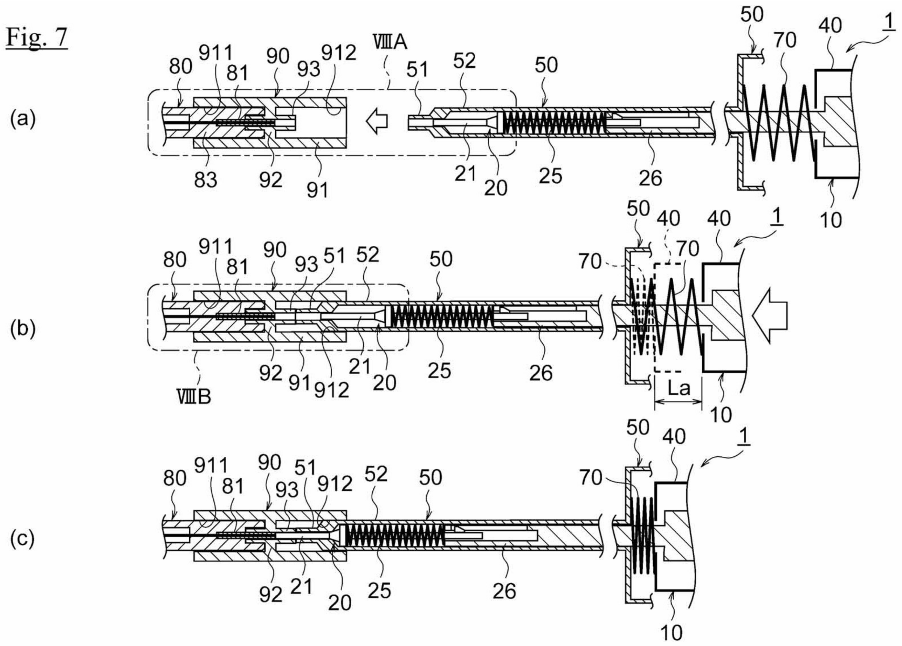

Specifically, when directly cleaning the optical connector plug 80 in the single state, the end face 811 of the ferrule 81 of the optical connector plug 80 is cleaned by inserting the front end of the cleaner 1 into the recess 831 of the optical connector plug 80 (refer to FIG. 5(a) to FIG. 5(c)). On the other hand, when cleaning the optical connector plug 80 attached to the adapter 90, the end face 811 of the ferrule 81 of the optical connector plug 80 is cleaned by inserting the front end of the cleaner 1 into the other recess 912 of the adapter 90 having one recess 911 into which the optical connector plug 80 is inserted (see FIG. 7(a) to FIG. 7(c)).

Although the optical connector plug 80 described above is an optical connector plug used in the plug-adapter-plug coupling system, the end surface of the ferrule of the optical connector receptacle used in the plug-receptacle coupling system may be cleaned using the optical connector cleaning tool 1 described below.

Although not particularly illustrated, similarly to the adapter 90 described above, the optical connector receptacle also includes a housing, a support wall, and a tubular part. The tubular part is supported by the support wall and is located inside the housing, and the tubular part is connected to the housing via the support wall. In the optical connector receptacle, the ferrule attached to the front end of the optical fiber is incorporated into the tubular part. The optical connector receptacle corresponds to an example of the "optical connector" in the aspect of the present invention, and the housing of the optical connector receptacle corresponds to an example of the "receiving part" in the aspect of the present invention.

The housing has a recess having the same shape as the recess 912 of the housing 91 of the adapter 90 described above, and the housing has the same inner diameter as the inner diameter $D_6$ of the housing 91. The tubular part also has the same shape as the tubular part 93 of the adapter 90 described above, the tubular part has the same outer diameter as the outer diameter $D_5$ of the tubular part 93 and has the same inner diameter as the inner diameter $D_4$ of the tubular part 93. Therefore, the ferrule of the counterpart optical connector plug can be fitted to the tubular part. The tubular part includes an inner circumferential portion that contacts the ferrule 81 and an outer circumferential portion that covers the inner circumferential portion. The inner circumferential portion is made of, for example, zirconia, while the outer circumferential portion is made of, for example, a resin material.

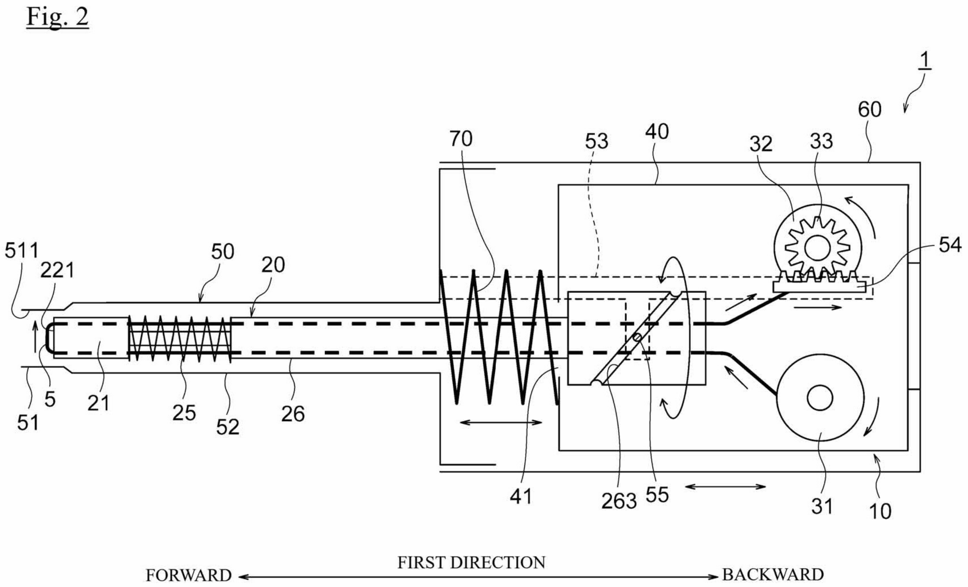

Hereinafter, the configuration of the optical connector cleaning tool 1 in the present embodiment will be described in detail with reference to FIG. 2 to FIG. 4(b).

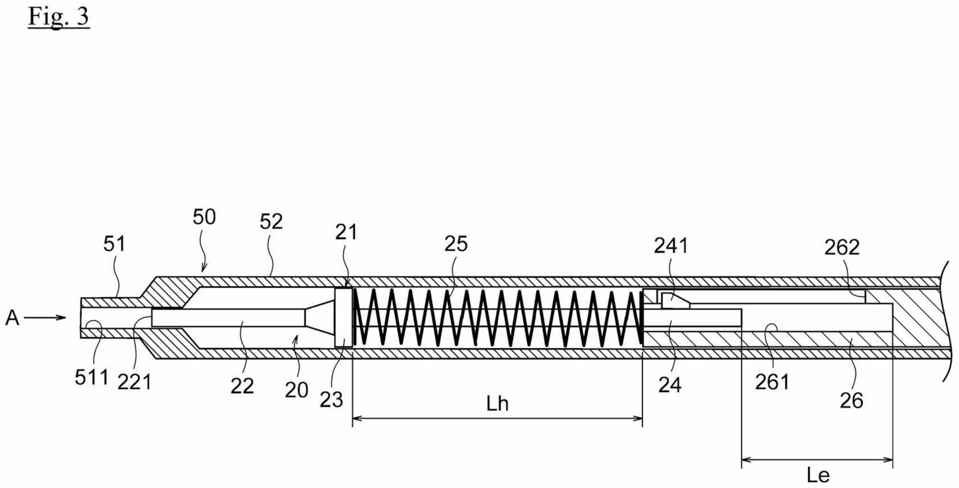

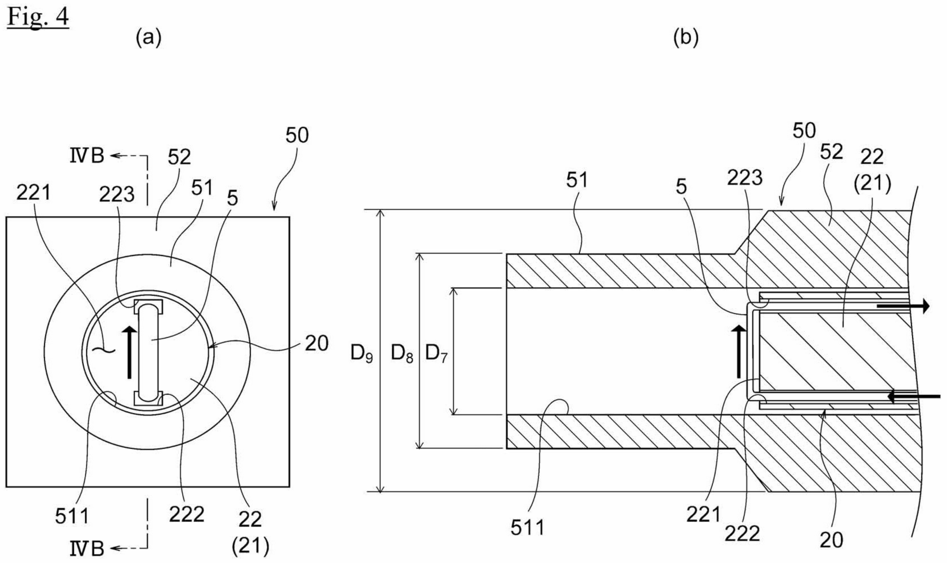

FIG. 2 is a schematic cross-sectional view showing the overall configuration of the cleaner 1 in the present embodiment, FIG. 3 is a cross-sectional view showing the front end portions of the cleaning shaft 20 and the guide nozzle 50 in the present embodiment, FIG. 4(a) is a front view of the cleaning shaft 20 and the guide nozzle 50 as viewed in the direction of arrow A in FIG. 3, and FIG. 4(b) is a cross-sectional view taken along line IVB-IVB in FIG. 4(a).

As shown in FIG. 2, the optical connector cleaning tool 1 in the present embodiment includes a cleaning unit 10, a guide nozzle 30, a housing 60, and a first biasing member 70. The cleaning unit 10 includes a cleaning shaft 20, a feeding bobbin 31, a winding bobbin 32, and a support body 40. The cleaner 1 cleans the optical connector plug 80 by pressing the cleaning element 5, which is wound on the cleaning shaft 20, against the connection end face 811 of the ferrule 81 of the optical connector plug 80 by the pressing surface 111 (described later) of the cleaning shaft 20.

Here, in the optical connector plug 80 in the single state, the front end of the ferrule 81 is located outside the housing 83 of the optical connector plug 80 (refer to FIG. 6(a)). On the other hand, in the optical connector plug 80 attached to the adapter 90, the front end of the ferrule 81 is located inside the tubular part 93 of the adapter 90 (refer to FIG. 8(a)). For this reason, in order to clean the optical connector plug 80 in both states with one cleaner, it is necessary to increase the relative movement amount of the cleaning head with respect to the guide nozzle and to increase the projection amount of the cleaning head from the front end of the guide nozzle.

On the other hand, in the present embodiment, the cleaning shaft 20, the feeding bobbin 31, the winding bobbin 32, and the support body 40 are unitized as the cleaning unit 10, and the entire cleaning unit 10 can move with respect to the guide nozzle 50. Therefore, the relative movement amount of the cleaning head 21 with respect to the guide nozzle 50 can be increased, and the projection amount of the cleaning head 21 from a front end portion 51 of the guide nozzle 50 can be increased. Accordingly, both the optical connector plug 80 in the single state and the optical connector plug 80 attached to the adapter 90 can be cleaned with one cleaner 1 without using the cap.

The cleaning element 5 is a continuous body obtained by processing a cleaning cloth into a thread or string shape. As a specific example of the cleaning cloth, for example, a nonwoven fabric or a woven fabric made of ultrafine fibers such as polyester and nylon can be exemplified. Although the cleaning element 5 of the present embodiment has a circular cross-sectional shape, the cross-sectional shape of the cleaning element 5 is not limited to this and may be, for example, a polygonal cross-sectional shape. Although not particularly limited, the cleaning element 5 has a diameter of 0.1 mm to 1 mm and preferably has a diameter of 0.2 to 0.3 mm. A narrow tape-like continuous body element obtained by processing the cleaning cloth into a band shape may be used as the cleaning element 5.

The cleaning shaft 20 is an elongate member for pressing the cleaning element 5 against the connection end surface 811 of the optical connector plug 80. The cleaning element 5 is held by the cleaning shaft 20 so that the cleaning element 5 is turned back at the pressing surface 221. The unused cleaning element 5 is supplied from the feeding bobbin 31 to the cleaning shaft 20. Then, the cleaning element 5 used on the pressing surface 221 is collected to the winding bobbin 32. The cleaning shaft 20 includes a cleaning head (head member) 21, a second biasing member 25, and a shaft member 26.

The cleaning head 21 is a member that forms the front end portion of the cleaning shaft 20. As shown in FIG. 3, the cleaning head 21 includes a pressing portion 22, a flange portion 23, and a shaft portion 24. The cleaning head 21 is made of a resin material, and the pressing portion 22, the flange portion 23, and the shaft portion 24 are integrally formed.

As shown in FIG. 4(a) and FIG. 4(b), the pressing portion 22 has the pressing surface 221 at its front end for pressing the cleaning element 5 against the connection end surface 811 of the optical connector plug 80. The pressing surface 221 has a circular shape to correspond to the shape of the connection end surface 811 of the ferrule 81 of the optical connector plug 80 as a cleaning object.

A pair of guide holes 222 and 223 are formed in the pressing surface 221, and the cleaning element 5 can pass through the inside of the cleaning shaft 20. The unused cleaning element 5 sent out from the feeding bobbin 31 passes through the inside of the cleaning shaft 20 and one guide hole 222 and is supplied to the pressing surface 221. Then, the cleaning element 5 supplied to the pressing surface 221 passes over the center of the pressing surface 221 and moves on the pressing surface 221 toward the other guide hole 223. The used cleaning element 5 passes through the other guide hole 223 and the inside of the cleaning shaft 20 and is wound around the winding bobbin 32. Instead of the above-mentioned guide holes 222 and 223, a pair of guide grooves may be formed on the side surface of the cleaning head 21, and the cleaning element 5 may be supplied to and collected from the pressing surface 221 through the guide grooves.

As shown in FIG. 3, the pressing portion 22 is connected to the flange portion 23 and protrudes forward from the flange portion 23. On the other hand, the shaft portion 24 is connected to the flange portion 23 to protrude rearward. The shaft portion 24 is a portion to be inserted into the insertion hole 261 of the shaft member 26. The shaft portion 24 has a protruding piece 241 that laterally protrudes.

The second biasing member 25 is interposed between the flange portion 23 of the cleaning head 21 and the front end surface of the shaft member 26 in a state in which the shaft portion 24 of the cleaning head 21 is inserted into the second biasing member 25. The second biasing member 25 biases the cleaning head 21 forward with respect to the shaft member 26, and the pressing surface 221 of the cleaning head 21 can press the cleaning element 5 against the connection end surface 811 of the optical connector plug 80 with an appropriate pressing force. As a specific example of the second biasing member 25, an elastic body such as a spring or a rubber can be exemplified, and as a specific example of the spring, a coil spring or the like can be exemplified.

An insertion hole 261 and a slit 262 are formed at the front end portion of the shaft member 26. The insertion hole 261 is open at the front end surface of the shaft member 26, and the shaft portion 24 of the cleaning head 21 is inserted into the insertion hole 261 so that the shaft portion 24 is movable in the first direction (front-rear direction). Here, the first direction is an insertion/removal direction of the cleaner 1 with respect to the optical connector plug 80, the adapter 90, or the optical connector receptacle at the time of cleaning and is also an axial direction (longitudinal direction) of the cleaning shaft 20.

The slit 262 is open on the side surface of the front end portion of the shaft member 26. The protruding piece 241 of the cleaning head 21 is inserted into the slit 262. The relative movement of the cleaning head 21 with respect to the shaft member 26 in the front-rear direction is guided by the insertion hole 261. The slit 262 prevents the cleaning head 21 biased by the second biasing member 25 from falling forward from the shaft member 26.

Here, as described above, in the optical connector plug 80 in the single state, the front end of the ferrule 81 is located outside the housing 83 of the optical connector plug 80. Therefore, when cleaning the optical connector plug 80 in the single state, as described below, it is necessary to insert the ferrule 81 of the optical connector plug 80 into the front end portion 51 of the guide nozzle 50, to bring the cleaning element 5 into contact with the connection end surface 811 of the ferrule 81, and then to move the cleaning unit 10 largely with respect to the guide nozzle 50.

On the other hand, although not particularly limited, in the present embodiment, the relative movement amount Le of the cleaning head 21 with respect to the shaft member 26 is set to satisfy the following formula (4). It is possible to allow the forward movement of the cleaning unit 10 with respect to the guide nozzle 50 in a state in which the cleaning head 21 presses the cleaning element 5 against the connection end face 811 of the ferrule 8 by ensuring a large relative movement amount Le of the cleaning head 21 with respect to the shaft member 26.

$$7 \ [\mathrm{mm}] \leqq \mathrm{Le} \leqq 12 \ [\mathrm{mm}] \ ... \ (1)$$

In the present embodiment, the compressible distance Ln of the second biasing member 25 satisfies the following formula (5). The compressible distance Ln can be calculated by the following formula (6).

$$\mathrm{Ln} \leqq \mathrm{Le} \ ... \ (5)$$

$$\mathrm{Ln} = \mathrm{Lh} - \mathrm{Lg} \ ... \ (6)$$

In the formula (6), Lh is the length of the second biasing member 25 in a state in which the second biasing member 25 is incorporated in the cleaner 1, that is, Lh is the length of the second biasing member 25 inside the cleaner 1 in the normal state (non-pressed state). The "normal state" means a state in which the cleaning head 21 is not pressing the cleaning element 5 against the connection end face 811 of the optical connector plug 80. In the following formula (6), Lg is the length of the second biasing member 25 when the second biasing member 25 is in the most contracted state, that is, Lg is the solid length (solid height) of the second biasing member 25.

Further, in the present embodiment, the push-back amount Lf when cleaning the optical connector plug 80 in the single state is significantly different from the push-back amount Lj when cleaning the optical connector plug 80 in a state attached to the adapter 90. Therefore, the second biasing member 25 has a spring constant k that satisfies the following formulas (7) and (8). The push-back amount is the amount of retraction of the cleaning head 21 from the state in which the cleaning head 21 protrudes most from the guide nozzle 50 to the state in which the second biasing member 25 is compressed and the cleaning head 21 presses the cleaning element 5 against the connection end surface 811 of the ferrule 81 with an appropriate pressing force.

$$0.95 \ [\mathrm{N}] < \mathrm{k} \times \mathrm{Lf} < 1.5 \ [\mathrm{N}] \ ... \ (7)$$

$$0.95 \ [\mathrm{N}] < \mathrm{k} \times \mathrm{Lj} < 1.5 \ [\mathrm{N}] \ ... \ (8)$$

The push-back amounts Lf and Lm can be respectively calculated by the following formulas (9) and (10) using the maximum protrusion amount Li of the cleaning head 21 from the guide nozzle 50. The maximum protrusion amount Li can be expressed as the following formula (11).

$$\mathrm{Lf} = \mathrm{Li} + \mathrm{Ld} \ ... \ (9)$$

$$\mathrm{Lj} = \mathrm{Li} - \mathrm{Lm} \ ... \ (10)$$

$$\mathrm{Li} = \mathrm{La} - \mathrm{Lb} \ ... \ (11)$$

In the above formulas (9) to (11), La is the distance in which the cleaning unit 10 can relatively move with respect to the guide nozzle 50, and Lb is the distance between the front end of the guide nozzle 50 and the pressing surface 221 of the cleaning head 21 in a normal state. Ld is the distance between the bottom surface 832 of the recess 831 of the optical connector plug 80 and the connection end surface 811 of the ferrule 81, and Lm is the distance between the end surface 931 of the tubular part 93 of the adapter 90 and the connection end surface 811 of the ferrule 81.

Therefore, the spring constant k of the second biasing member 25 satisfies the following formulas (12) and (13). Accordingly, the pressing surface 221 of the cleaning head 21 can press the cleaning element 5 with a more appropriate pressing force against the connection end surfaces 811 of the ferrules 81 of both the optical connector plug 80 in the single state and the optical connector plug 80 in a state attached to the adapter 90.

$$0.95 \ [N] < k \times (La - Lb + Ld) < 1.5 \ [N] \ ... \ (12)$$

$$0.95 \ [N] < k \times (La - Lb - Lm) < 1.5 \ [N] \ ... \ (13)$$

As shown in FIG. 2, the cleaning shaft 20 is supported by the support body 40 to be rotatable around the axis along the first direction. An opening 41 is formed in the support body 40. The rear end portion of the cleaning shaft 20 enters the support body 40 through the opening 41, while the other portion of the cleaning shaft 20 protrudes forward from the support body 40 through the opening 41.

The feeding bobbin 31 and winding bobbin 32 described above are also accommodated in the support body 40. The bobbins 31 and 32 are rotatably supported by the support body 40. As shown in FIG. 2, the feeding bobbin 31 can rotate only clockwise in the figure, and the counterclockwise rotation of the feeding bobbin 31 is restricted by a ratchet mechanism not shown. On the other hand, the winding bobbin 32 can rotate only counterclockwise in the figure, and the clockwise rotation of the winding bobbin 32 is restricted by a ratchet mechanism not shown. It is sufficient that the bobbins 31 and 32 are capable of rotating in only one direction. For example, the feeding bobbin 31 may rotate only in the counterclockwise direction, and the winding bobbin 32 may rotate only in the clockwise direction.

The guide nozzle 50 is a tubular member that accommodates the cleaning shaft 20 described above so that the cleaning shaft 20 is respectively movable with respect to the guide nozzle 50. The guide nozzle 30 includes a front end portion 51 having the opening 511 at the front end thereof and a main body portion 52 connected to the front end portion 51.

When directly cleaning the optical connector plug 80 in the single state, the ferrule 81 of the optical connector plug 80 is inserted into the opening 511 of the front end portion 51 of the guide nozzle 50, and the front end portion 51 is inserted into the recess 831 of the housing 83 of the optical connector plug 80. On the other hand, when cleaning the optical connector plug 80 in the state being attached to the adapter 90, the front end portion 51 and the main body portion 52 of the guide nozzle 50 are inserted into the recess 912 of the housing 91 of the adapter 90.

As shown in FIG. 4(a) and FIG. 4(b), the font end portion 51 has a cylindrical shape. The opening 511 of the front end portion 531 has an inner diameter $D_7$ that is slightly larger than the outer diameter $D_1$ of the ferrule 81 of the optical connector plug 80 ($D_7 > D_1$), and the ferrule 81 can be fitted to the front end portion 51 of the guide nozzle 50. On the other hand, the outer diameter $D_8$ of the front end portion 51 is smaller than the inner diameter $D_2$ of the recess 831 of the housing 83 of the optical connector plug 80 ($D_8 < D_2$), and the front end portion 51 of the guide nozzle 50 can be inserted into the recess 831 of the optical connector plug 80.

The inner diameter $D_7$ of the front end portion 51 is smaller than the outer diameter $D_5$ (refer to FIG. 8(a)) of the tubular part 93 of the adapter 90 described above ($D_7 < D_5$). Further, the outer diameter $D_8$ of the front end portion 51 is larger than the inner diameter $D_4$ (refer to FIG. 8(a)) of the tubular part 93 of the adapter 90 described above ($D_8 > D_4$). Therefore, since the front end portion 51 of the guide nozzle 50 and the tubular part 93 of the adapter 90 abut against each other, the tubular part 93 cannot be inserted into the front end portion 51 of the guide nozzle 50.

The main body portion 52 has a rectangular tubular shape that corresponds to the recesses 911 and 912 of the housing 91 of the adapter 90. The outer diameter $D_9$ of the main body portion 52 is larger than the outer diameter $D_8$ of the front end portion 51 ($D_9 > D_8$). The outer diameter $D_9$ of the main body portion 52 is also slightly smaller than the inner diameter $D_6$ (refer to FIG. 8(a)) of the recesses 911 and 912 of the housing 91 of the adapter 90 described above ($D_9 < D_6$). Therefore, the main body portion 52 of the guide nozzle 50 can be fitted to the recesses 911 and 912 of the housing 91 of the adapter 90.

As shown in FIG. 2, the housing 60 supports the guide nozzle 50 so that the guide nozzle 50 is relatively movable with respect to the housing 60 in the first direction. The housing 60 also accommodates the support body 40 described above. The support body 40 is fixed to the housing 60 and can relatively move together with the housing 60 with respect to the guide nozzle 50 in the first direction. That is, in the present embodiment, the cleaning unit 10 including the support body 40 can relatively move together with the housing 60 with respect to the guide nozzle 50 in the first direction. Although not particularly illustrated, the cleaner 1 includes a guide mechanism that guides the relative movement of the housing 60 with respect to the guide nozzle 50 in the first direction.

The first biasing member 70 is interposed between the guide nozzle 50 and the support body 40. The first biasing member 70 biases the support body 40 rearward with respect to the guide nozzle 50. As a specific example of the first biasing member 70, an elastic body such as a spring or a rubber can be exemplified, and as a specific example of the spring, a coil spring or the like can be exemplified.

The winding bobbin 32 supported by the support body 40 has a pinion gear 33. A rack gear 54 meshes with the pinion gear 33, and the rack gear 54 is supported by a support piece 53 connected to the guide nozzle 50. When the support body 40 (cleaning unit 10) relatively moves with respect to t the guide nozzle 50 in the first direction, the linear motion is converted into a rotation motion by the rack gear 54 and the pinion gear 33, the winding bobbin 32 rotates, and therefore the cleaning element 5 used on the pressing surface 221 of the cleaning shaft 20 is wound around the winding bobbin 32. Further, since the feeding bobbin 31 is rotated by the tension acting on the cleaning element 5 in accordance with the winding movement, the unused cleaning element 5 is fed from the feeding bobbin 31 to the pressing surface 221 of the cleaning shaft 20.

That is, in the present embodiment, the "drive mechanism" that rotationally drives the feeding bobbin 31 and the winding bobbin 32 in accordance with the relative movement of the cleaning unit 10 with respect to the guide nozzle 50 is realized by the rack-and-pinion mechanism including the rack gear 54 and the pinion gear 33. The configuration of the drive mechanism is not limited to the above-mentioned rack-and-pinion mechanism as long as it is a mechanism that rotationally drives the feeding bobbin 31 and the winding bobbin 32 in accordance with the relative movement of the cleaning unit 10 with respect to the guide nozzle 50.

A spiral cam groove 263 is formed on the outer peripheral surface of the rear end portion of the shaft member 26 of the cleaning shaft 20. On the other hand, a cam pin 55 is inserted into the cam groove 263, and the cam pin 55 is also supported by a support piece 53 connected to the guide nozzle 50. When the support body 40 (cleaning unit 10) relatively moves with respect to the guide nozzle 50 in the first direction, the cam pin 55 relatively slides in the cam groove 263, and therefore, the cleaning shaft 20 rotates around the rotation axis along the first direction.

Next, a method of using the optical connector cleaning tool 1 described above will be described with reference to FIG. 5(a) to FIG. 8(b).

FIG.5(a) to FIG.5(c) are diagrams for explaining a method of directly cleaning the optical connector plug 80 in a single state using the cleaner 1 in the present embodiment. FIG. 5(a) is a diagram showing a state before the cleaner 1 is inserted into the optical connector plug 80, and FIG. 5(b) is a diagram showing a state in which the cleaner 1 is inserted into the optical connector plug 80, and FIG. 5(c) is a diagram showing a state in which the cleaning unit 10 is pushed to the guide nozzle 50. FIG. 6(a) is an enlarged view of a portion VIA in FIG. 5(a), and FIG. 6(b) is an enlarged view of a portion VIB in FIG. 5(b).

When directly cleaning the optical connector plug 80 in a single state, as shown in FIG. 5(a), FIG. 5(b), FIG. 6(a), and FIG. 6(b), the operator first inserts the ferrule 81 into the opening 511 of the front end portion 51 of the guide nozzle 50 and inserts the front end portion 51 into the recess 831 of the housing 83 of the optical connector plug 80. As a result, the ferrule 81 is fitted to the front end portion 51 of the guide nozzle 50, the front end portion 51 of the guide nozzle 50 abuts against the bottom surface 832 of the recess 831 of the housing 83, and therefore the cleaning head 21 is positioned with respect to the connection end surface 811 of the ferrule 81. In addition, the cleaning head 21 brings the cleaning element 5 into contact with the connection end surface 811 of the ferrule 81.

Next, as shown in FIG. 5(b) and FIG. 5(c), when the operator pushes the housing 60 to the guide nozzle 50 in the first direction, the cleaning unit 10 moves forward with respect to the guide nozzle 50, the first biasing member 70 contracts, and the second biasing member 25 also contracts. At this time, since the relative movable amount Le of the cleaning head 21 with respect to the shaft member 26 is set to satisfy the above formula (4), the relative forward movement of the cleaning unit 10 with respect to the guide nozzle 50 is allowed in a state in which the cleaning head 21 presses the cleaning element 5 against the connecting end face 811 of the ferrule 81. Further, the cleaning head 21 presses the cleaning element 5 against the connection end face 811 of the ferrule 81 with an appropriate pressing force due to the contraction of the second biasing member 25.

Further, the rack gear 54 and pinion gear 33 rotate the winding bobbin 32 by the above-mentioned pushing operation of the housing 60 with respect to the guide nozzle 50 by the operator. As a result, the used cleaning element 5 is collected from the pressing surface 221 of the cleaning shaft 20 to the winding bobbin 32, and the unused cleaning element 5 is supplied from the feeding bobbin 31 to the pressing surface 221. Therefore, the cleaning element 5 slides while being pressed against the connection end surface 811 of the optical connector plug 80, and the contaminant adhering to the connection end surface 811 is wiped.

Furthermore, the cam pin 53 supported by the guide nozzle 50 relatively slides inside the cam groove 263 of the cleaning shaft 20 by the above-mentioned pushing operation of the operator, and the cleaning shaft 20 rotates around the rotation axis along the first direction. Therefore, even if the width of the threadlike or string-like cleaning element 5 is narrower than the connection end surface 811 to be cleaned, the contaminant can be wiped off from the entire area of the connection end surface 811. Although not particularly limited, the rotation angle of the cleaning shaft 10 is preferably 180 degrees or more.

Next, when the operator releases the pushing of the housing 60 with respect to the guide nozzle 50, the housing 60 moves backward with respect to the guide nozzle 50 by the elastic force of the first biasing member 70. At this time, since the ratchet mechanism (not shown) restricts the counterclockwise rotation of the feeding bobbin 31 and restricts the clockwise rotation of the winding bobbin 32, the bobbins 21 and 22 do not rotate.

On the other hand, the cam pin 55 supported by the guide nozzle 50 relatively slides inside the cam groove 263 of the cleaning shaft 20 by the releasing operation by the operator, and the cleaning shaft 20 rotates in the direction opposite to the rotation direction during the above-mentioned pushing operation.

When the cleaning is finished, the operator removes the cleaner 1 from the optical connector plug 80 by pulling out the front end portion 51 of the guide nozzle 50 of the cleaner 1 from the optical connector plug 80.

FIG. 7(a) to FIG. 7(c) are diagrams for explaining a method of cleaning the optical connector plug 80 in a state of being attached to the adapter 90 using the cleaner 1 in the present embodiment. FIG. 7(a) is a diagram showing a state before the cleaner 1 is inserted into the adapter 90, FIG. 7(b) is a diagram showing a state in which the cleaner 1 is inserted into the adapter 90, and FIG. 7(c) is a diagram showing a state in which the cleaning unit 10 is pushed to the guide nozzle 50. FIG. 8(a) is an enlarged view of a portion VIIIA in FIG. 7(a), and FIG. 8(b) is an enlarged view of a portion VIIIB in FIG. 7(b).

When cleaning the optical connector plug 80 in a state of being attached to the adapter 90, as shown in FIG. 7 (a), FIG. 7(b), FIG. 8(a), and FIG. 8(b), the operator first inserts the front end portion 51 and the main body portion 52 of the guide nozzle 50 of the cleaner 1 into the recess 912 of the housing 91 of the adapter 90. As a result, the main body portion 52 of the guide nozzle 50 is fitted to the recess 912 of the housing 91 of the adapter 90, the front end portion 51 of the guide nozzle 50 abuts against the end face 931 of the tubular part 93 of the adapter 90, and therefore the cleaning head 21 is positioned with respect to the connection end surface 811 of the ferrule 81.

Next, as shown in FIG. 7(b) and FIG. 7(c), when the operator pushes the housing 60 to the guide nozzle 50 in the first direction, the cleaning unit 10 moves forward with respect to the guide nozzle 50, the first biasing member 70 contracts, and the front end part of the pressing portion 22 of the cleaning head 21 protrudes from the front end portion 51 of the guide nozzle 50. The front end part of the pressing portion 22 of the cleaning head 21 enters the tubular part 93 of the adapter 90, and the front end part of the pressing portion 22 is fitted to the tubular part 93.

Then, when the operator further pushes the housing 60 to the guide nozzle 50 in the first direction, the first biasing member 70 further contracts, and the cleaning head 21 brings the cleaning element 5 into contact with the connection end surface 811 of the ferrule 81. Thereafter, the second biasing member 25 also contracts, and the cleaning head 21 presses the cleaning element 5 against the connection end face 811 of the ferrule 81 with an appropriate pressing force.

Further, as in the case of the optical connector plug 80 in the single state described above, the cleaning element 5 slides while being pressed against the connection end surface 811 of the optical connector plug 80 by the above-mentioned pushing operation of the housing 60 with respect to the guide nozzle 50 by the operator, and therefore the contaminant adhering to the connection end surface 811 is wiped. At this time, the cleaning shaft 20 rotates around the rotation axis along the first direction. Then, when the operator releases the pushing of the housing 60 with respect to the guide nozzle 50, the operator removes the cleaner 1 from the optical connector plug 80 by pulling out the front-end portion 51 and the main body portion 52 of the guide nozzle 50 of the cleaner 1 from the optical connector plug 80.

Although not particularly illustrated, when cleaning the connection end face of the ferrule included in the optical connector receptacle, the connection end face can be cleaned using the cleaner 1 in a manner similar to the manner of cleaning the optical connector plug 80 attached to the adapter 90 (the manner described above with reference to FIG. 7(a) to FIG. 7(c)).

As described above, in the present embodiment, the cleaning unit 10 including the cleaning head 21, the shaft member 26, the feeding bobbin 31, and the winding bobbin 32 is relatively movable with respect to the guide nozzle 50, the relative movement amount of the cleaning head 21 with respect to the guide nozzle 50 can be increased, and the projection amount of the cleaning head 21 from the guide nozzle 50 can also be increased. Therefore, the cleaner 1 is capable of cleaning the connection end surface 811 of the optical connector plug 80 without using the cap regardless of the state of the optical connector plug 80, it is not necessary to attach and detach the cap, and it is possible to improve the efficiency of the cleaning work of the optical connector plug 80.

It should be noted that the embodiment described above are described to facilitate understanding of the present disclosure and are not described to limit the present disclosure. It is therefore intended that the elements disclosed in the above embodiment include all design modifications and equivalents to fall within the technical scope of the present disclosure.

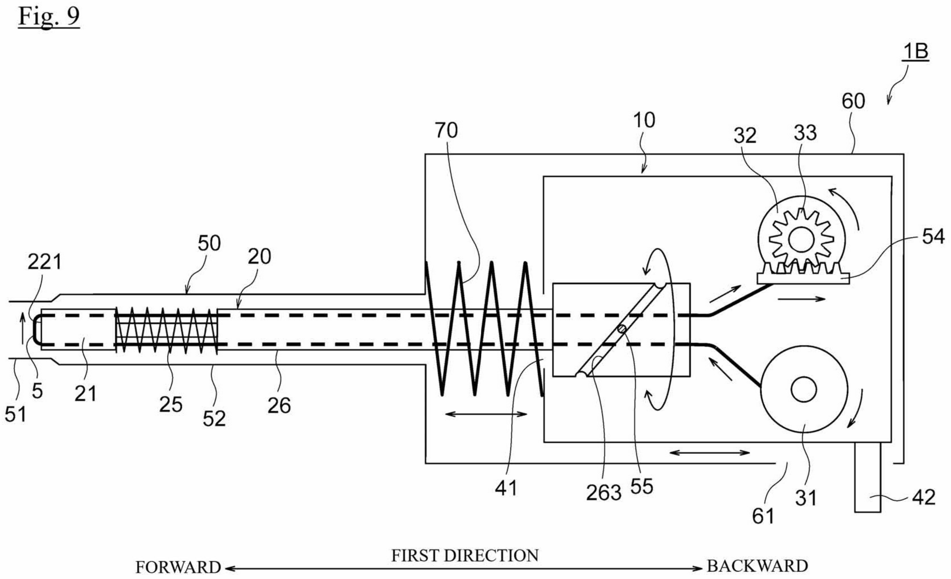

Although the housing 60 is fixed to the support body 40 and the housing 60 is relatively movable together with the cleaning unit 10 with respect to the guide nozzle 50 in the above embodiment, the fixing destination of the housing 60 is not limited to the support body 40. For example, as shown in FIG. 9, the housing 60 may be fixed to the guide nozzle 50, and the housing 60 may be relatively movable together with the guide nozzle 50 with respect to the cleaning unit 10. FIG. 9 is a schematic cross-sectional view showing the overall configuration of the optical connector cleaning tool 1B in another embodiment of the present invention.

For example, in the cleaner 1B shown in FIG. 9, the rack gear 54 and the cam pin 55 are supported by the housing 60 instead of the support piece 43. A lever 42 is attached to the support body 40. An opening 61 is formed in the housing 60, and the lever 42 protrudes to the outside of the housing 60 through the opening 61. When the operator pushes the lever 42 forward, the cleaning unit 10 can be moved with respect to the guide nozzle 50 in the first direction.

[EXPLANATIONS OF LETTERS OR NUMERALS]

| | |
|---|---|
| 1, 1B | Optical connector cleaning tool |
| 5 | Cleaning element |
| 10 | Cleaning unit |
| 20 | Cleaning shaft |
| 21 | Cleaning head |
| 22 | Pressing portion |
| 221 | Pressing surface |
| 222, 223 | Guide hole |
| 23 | Flange portion |
| 24 | Shaft portion |
| 241 | Protruding piece |
| 25 | Second Biasing member |
| 26 | Shaft member |
| 261 | Insertion hole |
| 262 | Slit |
| 263 | Cam groove |
| 31 | Feeding bobbin |
| 32 | Winding bobbin |
| 33 | Pinion gear |
| 40 | Support body |
| 41 | Opening |
| 42 | Lever |
| 50 | Guide nozzle |
| 51 | Front end portion |
| 511 | Opening |
| 52 | Main body portion |
| 53 | Support piece |
| 54 | Rack gear |
| 55 | Cam pin |
| 60 | Housing |
| 61 | Opening |
| 70 | First biasing member |
| 80 | Optical connector plug |
| 81 | Ferrule |
| 811 | Connection end surface |
| 82 | Optical fiber |
| 83 | Housing |
| 831 | Recess |
| 832 | Bottom surface |
| 90 | Adaptor |
| 91 | Housing |
| 911, 912 | Recess |
| 92 | Support wall |
| 93 | Tubular part |
| 931 | End face |

**Claims**

1. An optical connector cleaning tool that cleans a connection end surface of an optical connector, the optical connector cleaning tool comprising:

    a cleaning unit comprising:

        a cleaning head that comprises a pressing surface pressing a cleaning element against the connection end surface and in which the cleaning element is wound on the pressing surface;

a shaft member that supports the cleaning head so that the cleaning head is relatively movable with respect to the shaft member; and

a supplying and collecting unit that supplies and collects the cleaning element to and from the pressing surface,

a tubular member that accommodates the cleaning unit so that the cleaning unit is relatively movable with respect to the tubular member and that has a front end portion through which the cleaning head can protrude and retract, and

a drive mechanism that drives the supplying and collecting unit in accordance with a relative movement of the cleaning unit with respect to the tubular member.

2. The optical connector cleaning tool according to claim 1, wherein
a relative movable amount Le of the cleaning head with respect to the shaft member satisfies the following formula (1).

$$7 \ [\mathrm{mm}] \leqq \mathrm{Le} \leqq 12 \ [\mathrm{mm}] \ ... \ (1)$$

3. The optical connector cleaning tool according to claim 1 or 2, wherein

the cleaning unit comprises a support body that supports the shaft member and the supplying and collecting unit, the optical connector cleaning tool comprises:

a housing that accommodates the support body; and
a first biasing member that biases the support body in a direction away from the tubular member, and the housing is fixed to the support body and is relatively movable together with the support body with respect to the tubular member.

4. The optical connector cleaning tool according to claim 1 or 2, wherein

the cleaning unit comprises a support body that supports the shaft member and the supplying and collecting unit, the optical connector cleaning tool comprises:

a housing that accommodates the support body; and
a first biasing member that biases the support body in a direction away from the tubular member, and the housing is fixed to the tubular member and is relatively movable together with the tubular member with respect to the support body.

5. The optical connector cleaning tool according to claim 3 or 4, wherein

the supplying and collecting unit comprises:

a feeding bobbin from which the cleaning element supplied to the pressing surface is fed; and
a winding bobbin around which the cleaning element collected form the pressing surface is wound, the support body rotatably supports the feeding bobbin and the winding bobbin, and the drive mechanism rotates the winding bobbin in accordance with the relative movement of the cleaning unit with respect to the tubular member to wind the cleaning element around the winding bobbin.

6. The optical connector cleaning tool according to any one of claims 1 to 5, wherein
the front end portion of the tubular member has an inner diameter to allow a ferrule of the optical connector to be inserted into the front end portion and not to allow a holding part holding the ferrule to be inserted into the front end portion.

7. The optical connector cleaning tool according to any one of claims 1 to 6, wherein

the tubular member comprises a main body to which the front end portion is connected,
the main body has an outer diameter to allow the main body to be inserted into a receiving part capable of receiving a counterpart optical connector.

8. The optical connector cleaning tool according to any one of claims 1 to 7, wherein
the cleaning unit comprises a second biasing member that is interposed between the cleaning head and the shaft member and that biases the cleaning head in a direction away from the shaft member.

9. The optical connector cleaning tool according to claim 8, wherein

the second biasing member has a spring constant k that satisfies the following formulas (2) and (3).

$$0.95 \ [N] < k \times (La - Lb + Ld) < 1.5 \ [N] \ ... \ (2)$$

$$0.95 \ [N] < k \times (La - Lb - Lm) < 1.5 \ [N] \ ... \ (3)$$

In the above formulas (2) and (3),
La is a distance in which the cleaning unit can relatively move with respect to the tubular member,
Lb is a distance between a front end of the tubular member and the pressing surface in a normal state,
Ld is a distance between a first contact surface of the optical connector with the tubular member and the connection end surface of a ferrule of the optical connector, and
Lm is a distance between a second contact surface of a holding part holding the ferrule with the tubular member and the connection end surface of the ferrule.

Fig. 1

Fig. 2

Fig. 3

Fig. 4

(a)

(b)

Fig. 5

Fig. 6

Fig. 7

(a)

(b)

(c)

Fig. 8

Fig. 9

## INTERNATIONAL SEARCH REPORT

| | International application No. |
|---|---|
| | **PCT/JP2024/000648** |

| **A.** | **CLASSIFICATION OF SUBJECT MATTER** |
|---|---|

*G02B 6/36*(2006.01)i; *B08B 1/00*(2024.01)i
FI:   G02B6/36; B08B1/00

According to International Patent Classification (IPC) or to both national classification and IPC

| **B.** | **FIELDS SEARCHED** |
|---|---|

Minimum documentation searched (classification system followed by classification symbols)

G02B6/36; B08B1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2011-186083 A (FUJIKURA LTD.) 22 September 2011 (2011-09-22) | 1, 8 |
| | paragraphs [0008]-[0060], fig. 1-23 | |
| Y | paragraphs [0008]-[0060], fig. 1-23 | 6-7 |
| A | paragraphs [0008]-[0060], fig. 1-23 | 2-5, 9 |
| X | WO 2019/198273 A1 (FUJIKURA LTD.) 17 October 2019 (2019-10-17) | 1, 7-8 |
| | paragraphs [0022]-[0084], fig. 1-6 | |
| Y | paragraphs [0022]-[0084], fig. 1-6 | 6 |
| A | paragraphs [0022]-[0084], fig. 1-6 | 2-5, 9 |
| Y | WO 2019/049441 A1 (FUJIKURA LTD.) 14 March 2019 (2019-03-14) | 6-7 |
| | paragraphs [0028]-[0152], fig. 1-17 | |
| A | US 2003/0098045 A1 (3M INNOVATIVE PROPERTIES COMPANY) 29 May 2003 (2003-05-29) | 1-9 |
| | entire text, all drawings | |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/000648**

**C.     DOCUMENTS CONSIDERED TO BE RELEVANT**

| Category* | Citation of document, with indication, where appropriate, of the relevant passages | Relevant to claim No. |
|---|---|---|
| A | US 6116101 A (TELCORDIA TECHNOLOGIES, INC.) 12 September 2000 (2000-09-12) entire text, all drawings | 1-9 |
| A | JP 02-033110 A (NIPPON TELEGRAPH AND TELEPHONE CORPORATION) 02 February 1990 (1990-02-02) entire text, all drawings | 1-9 |

Form PCT/ISA/210 (second sheet) (July 2022)

## INTERNATIONAL SEARCH REPORT
### Information on patent family members

| International application No. |
| --- |
| **PCT/JP2024/000648** |

| Patent document cited in search report | | | Publication date (day/month/year) | Patent family member(s) | | | Publication date (day/month/year) |
| --- | --- | --- | --- | --- | --- | --- | --- |
| JP | 2011-186083 | A | 22 September 2011 | US 2012/0017384 A1 paragraphs [0053]-[0183], fig. 1-23 | | | |
| | | | | WO | 2011/108303 | A1 | |
| | | | | EP | 2400325 | A1 | |
| | | | | CN | 102189084 | A | |
| WO | 2019/198273 | A1 | 17 October 2019 | US 2021/0146405 A1 paragraphs [0027]-[0095], fig. 1-6 | | | |
| | | | | EP | 3779541 | A1 | |
| | | | | CN | 111902753 | A | |
| WO | 2019/049441 | A1 | 14 March 2019 | US 2020/0166714 A1 paragraphs [0046]-[0185], fig. 1-17 | | | |
| | | | | EP | 3680697 | A1 | |
| | | | | CN | 110799873 | A | |
| US | 2003/0098045 | A1 | 29 May 2003 | WO | 2003/047775 | A2 | |
| US | 6116101 | A | 12 September 2000 | (Family: none) | | | |
| JP | 02-033110 | A | 02 February 1990 | (Family: none) | | | |

Form PCT/ISA/210 (patent family annex) (July 2022)

**REFERENCES CITED IN THE DESCRIPTION**

**Patent documents cited in the description**

- JP 2023086330 A
- JP 2010191465 A